# EUROPEAN PATENT SPECIFICATION

(11) **EP 4 207 672 B1**
(45) Date of publication and mention of the grant of the patent: **17.04.2024**
(21) Application number: 22168962.3
(22) Date of filing: 20.04.2022
(51) Int. Cl.: H04L 9/00, H04L 9/30

(54) **DUMMY PARTIAL MULTIPLICATION OF ZERO-OPERANDS AS A LOW-COST MEANS FOR REDUCING THE SUCCESS OF SCA ATTACKS AGAINST ECC**
DUMMY-TEILMULTIPLIKATION VON NULL-OPERANDEN ALS KOSTENGÜNSTIGES MITTEL ZUR REDUZIERUNG DES ERFOLGS VON SCA-ANGRIFFEN GEGEN ECC
MULTIPLICATION PARTIELLE FACTICES D'OPÉRANDES NULS EN TANT QUE MOYEN PEU COÛTEUX DE RÉDUIRE LE SUCCÈS DES ATTAQUES SCA CONTRE ECC

(30) Priority: 28.12.2021 EP 21217968
(43) Date of publication of application: 05.07.2023
(73) Proprietor: IHP GmbH - Innovations for High Performance Microelectronics / Leibniz-Institut für innovative Mikroelektronik, 15236 Frankfurt (Oder) (DE)
(72) Inventor: KABIN, Ievgen, 15236 Frankfurt (Oder) (DE); DYKA, Zoya, 15236 Frankfurt (Oder) (DE); KLANN, Dan, 15236 Frankfurt (Oder) (DE); LANGENDÖRFER, Peter, 15236 Frankfurt (Oder) (DE)
(74) Representative: Eisenführ Speiser

(56) References cited:
- DYKA ZOYA ET AL: "Inherent Resistance of Efficient ECC Designs against SCA Attacks", 2016 8TH IFIP INTERNATIONAL CONFERENCE ON NEW TECHNOLOGIES, MOBILITY AND SECURITY (NTMS), IEEE, 21 November 2016 (2016-11-21), pages 1-5, XP033034816, DOI: 10.1109/NTMS.2016.7792457 [retrieved on 2016-12-20]
- KABIN IEVGEN ET AL: "Fast Dual-Field ECDSA Accelerator with Increased Resistance against Horizontal SCA Attacks", 2021 IEEE INTERNATIONAL CONFERENCE ON CYBER SECURITY AND RESILIENCE (CSR), IEEE, 26 July 2021 (2021-07-26), pages 273-280, XP033969952, DOI: 10.1109/CSR51186.2021.9527912 [retrieved on 2021-09-01]
- SALDAMLI GOKAY ET AL: "Uniform Montgomery multiplier", JOURNAL OF CRYPTOGRAPHIC ENGINEERING, SPRINGER BERLIN HEIDELBERG, BERLIN/HEIDELBERG, vol. 9, no. 4, 7 May 2019 (2019-05-07), pages 333-339, XP036925349, ISSN: 2190-8508, DOI: 10.1007/S13389-019-00213-7 [retrieved on 2019-05-07]

## Description

The present invention is in the field of cryptographic hardware, software, and cryptographic processing applications.

Cryptographic protocols using Elliptic Curves (EC) over finite fields are approaches well known for the generation and verification of digital signatures as well as for mutual authentication. In comparison with the equally known RSA (Rivest-Shamir-Adleman) method, elliptic curve cryptography results in memory and band-width savings, the time and energy required for sending and receiving the messages is in fact effectively reduced. These features make ECC very attractive for resource-constrained devices that require not only a high level of security but also low-power, real-time communication and data processing. Nowadays, Elliptic Curve Cryptosystems (ECC) are widely used as a means for implementing security requirements in many application areas, especially for the Internet of Things (loT), autonomous driving, e-health, Industry 4.0, wireless network sensors (WNS).

ECC is a variant of public key cryptography. Each communication partner has a public key and a private key which are an assigned pair. The private key is a (long) binary number. The public key is a point of an elliptic curve (EC) over a finite field. The basis operation in EC cryptographic protocols is a multiplication of an EC point P with a scalar k, denoted as an EC point multiplication (kP operation). The kP operation is defined mathematically as a k-fold addition of a point P on an elliptic curve to itself. It can thus be calculated as a sequence of EC point additions and doublings. The kP operation is an expensive operation in terms of required time and energy. The acceleration of this task by dedicated cryptographic hardware, herein referred to as EC kP hardware accelerator, speeds up the execution time and provides energy savings.

The security of ECC is based on the secrecy of the private key. The goal of an attacker is thus to reveal the private key. EC-based digital signature protocols use a random number as the scalar k for digital signature generation. In case of successfully revealing the scalar k analyzing statistically the power or electromagnetic trace(s) captured during a signature generation (such attacks are known as side-channel analysis attacks), an attacker can easily calculate the private key used for generating the signature. By EC authentication approaches the scalar *k* is the private key. Due to these facts, we denote further the scalar *k* also as a *key.*

Side Channel Analysis (SCA) attacks are classified into vertical, i.e. multiple-trace, or horizontal, i.e. single-trace, attacks. kP algorithms implemented in hardware often realize a bitwise processing of the scalar k. The processing of a single bit of the scalar k requires many clock cycles. If the sequence of mathematical operations for the processing a bit value '0' differs from the one for the processing a bit value '1', their power profiles will be distinguishable. In this case, the scalar k can be revealed via visual inspection of the single measured trace. Therefore, such implementations are vulnerable to simple SCA attacks.

Well-known countermeasures against simple SCA are known as regularity and atomicity principles. The basic idea of the regularity principle is the processing of each bit of the scalar k using always the same sequence of operations. Particularly, algorithms based on the regularity principle require the same time (number of clock cycles) for processing each key bit value. The atomicity principle proposes to process each bit of the scalar k as a set of (short) sequence of operations. The used (short) sequence of operations is called an "atom". Execution of a single atom corresponds to a (small) part of measured power trace denoted as an atomic pattern profile. The main idea of the atomicity principles is that power profiles of atoms are very similar (not distinguishable).

The Montgomery ladder is a known algorithm for calculating kP. Low-cost hardware implementations of the Montgomery ladder, especially for ECs over extended binary finite fields, are widely used for accelerating authentication protocols. The Montgomery ladder based algorithms apply the regularity principle. Additionally, different atomic patterns are well-known and can be applied for calculating kP, especially for ECs over prime fields. However, hardware implementations of the Montgomery ladder can be vulnerable to horizontal address-bit SCA attacks. A vulnerability of the Montgomery ladder hardware accelerators to vertical address-bit attacks is known since 2002.

One of the known countermeasures against horizontal address bit attacks is introducing noise. This approach is published in the following paper:
Zoya Dyka, levgen Kabin, Dan Klann and Peter Langendoerfer: "Multiplier as a Mean for Reducing Vulnerability of Atomic Patterns to Horizontal Address-Bit Attacks", Proc. 10th Mediterranean Conference on Embedded Computing (MECO 2021, June 7 to 10, 2021). DOI:10.1109/MECO52532.2021.9460158

Another approach is disclosed in Dyka Zoya et al: "Inherent Resistance of Efficient ECC Designs against SCA Attacks", 8th IFIP International Conference on New Technologies, Mobility and Security, 21 November 2016, DOI: 10.1109/NTMS.2016.7792457 In particular dummy partial multiplication of non-zero operands were proposed as a source of noise in this publication to achieve an always-active field multiplier. A field multiplier calculates field products corresponding to a 4 segment Karatsuba multiplication formula for GF(p) elements. Whenever applicable, instead of waiting for required operands of a partial multiplication, the multiplier calculates dummy non-zero partial products. The dummy partial products do not influence the result of the kP calculation because they are not used in the calculation flow. During this dummy activity, the multiplier consumes additional energy that is a kind of noise. This way, the dummy activity of the multiplier can hide the key-dependent addressing of the blocks. This approach is reported as reducing the success rate of a horizontal address bit attack.

An object of the present invention is to improve the resistance of the cryptographic hardware accelerators, which use an elliptic curve, EC, point multiplication, against horizontal SCA attacks, in particular against horizontal address-bit attacks.

According to a first aspect of the invention, a device for performing accelerated elliptic curve point multiplication is provided. The device comprises:
- one or more computational blocks for performing a field multiplication, a field addition, a field subtraction or a field squaring;
- addressable registers;
- a bus for data exchange between the blocks and the registers; and
- a controller, which is configured

to control operation of the computational blocks, the registers and the bus in determining the EC point multiplication result by performing iterations of a main loop operation sequence that comprises
   - in accordance with an implemented field multiplication algorithm: a sequential calculation of partial products derived from input multiplicands, and an accumulation of the partial products in an internal accumulation register of the computational block for determining the field product of the input multiplicands; and in
   - read and write accesses to the registers associated with calculating field additions, subtractions or field squarings of the respective operands;
wherein the controller is further configured
to determine for each of the iterations of the main loop operation sequence a respective set of respective dummy clock cycle positions, and to control the computational blocks to perform a partial multiplication of zero-operands in dummy clock cycles corresponding to the respective determined set of respective dummy clock cycle positions for the respective main loop iteration, wherein in any set of two or more dummy clock cycle positions each two of the dummy clock cycle positions are separated from each other by at least one clock cycle of performing a partial multiplication of non-zero operands, and wherein at least two of the sets of the dummy clock cycle positions differ from each other.

The device of the present invention will herein also be referred to as an EC kP hardware accelerator. It is typically implemented as a monolithic integrated circuit device.

The invention is based on the following recognitions and considerations.

The field multiplier block of an EC kP hardware accelerator is the block with the highest energy consumption. However, dependent on a parallelization of operations a computational block for performing field multiplication, in particular a dedicated field multiplier block can be not always active, because it must sometimes wait for new operands corresponding to the main loop operation sequence in the implemented *kP* algorithm.

Known EC kP hardware accelerators that obey the atomicity and/or regularity principles exhibit tiny differences in energy consumption during the processing of the '0' key bit values in comparison with the processing of the '1' key bit values. While the field multiplier block is not active the key-dependent addressing/activity of the other blocks and registers becomes more "visible". Particularly, the vulnerability to horizontal address-bit attacks is therefore high if the field multiplier block is not active and cannot hide such differences. Such EC kP hardware accelerators are therefore still vulnerable to horizontal address-bit SCA attacks exploiting the key dependent addressing of the design's blocks during an elliptic curve point multiplication.

The controller of the EC kP hardware accelerator controls the computational blocks, such as, e.g., a field multiplier block to perform a partial multiplication of zero-operands, i.e., values of zero as operands as a further partial multiplication, which may be considered a "dummy partial multiplication of zero-operands". This offers the advantage that no addressing is required for obtaining the zero-operands as well as for storing intermediate values, due to the fact that the partial product of zero-operands is zero and its addition to already accumulated partial products does not falsify the field multiplication result. Thus, such an additional dummy partial multiplication does not change the output value of the field multiplier block with respect to an ongoing calculation. During the dummy activity, the field multiplier block consumes additional energy that is advantageously used as noise, i.e. it can hide the small differences in energy consumption caused by key-dependent addressing of the blocks and therefore reduces the success probability of horizontal SCA attacks.

The inventors have further recognized that if the field multiplier block multiplies two partial zero-operands (or any other partial operands, for example a random values a and *b*) one by one for two clock cycles in a row, its energy consumption will be high only in the first clock cycle. In the second clock cycle, the energy consumption will be significantly smaller, because the inputs are not changed, i.e. the state of the logic gates of the computational block performing the partial multiplication remains the same as in the first clock cycle. Thus, no gate switching and consumption of energy is required in the second clock cycle. This will reduce the desired hiding effect. Therefore, only a single dummy partial multiplication of zero-operands has a hiding effect. The present invention proposes to use the hiding effect of the single dummy partial multiplication of zero-operands. We denote here the clock cycles used for calculating such an additional partial multiplication of zero-operands as dummy clock cycles. In any set of two or more such dummy clock cycle positions, each two of the dummy clock cycle positions are separated from each other by at least one clock cycle of performing a partial multiplication of non-zero-operands.

A further point considered by the inventors is that many horizontal SCA attacks, especially address-bit SCA attacks, use the fact that the key dependent addressing of blocks happens in the same clock cycle number of the main loop iterations. Thus, the regularity principle is on the one hand a countermeasure against horizontal attacks but on the other hand it increases the success of horizontal attacks. According to the present invention, the controller further controls the field multiplier block to perform a partial multiplication of zero-operands in those dummy clock cycles that correspond to the determined dummy clock cycle positions for the respective iteration. The flexible insertion of dummy clock cycles can de-synchronize the key dependent addressing of the one or more computational blocks and registers in the power shape of the main loop iterations and reduce this way the success of the attacks.

The dummy clock cycles are for performing additional operations within the main loop iterations. If present, they increase the total number of clock cycles required for processing the scalar *k*. In one embodiment, inserting different numbers, in particular a random number of dummy partial multiplications in the different main loop iterations randomizes the total number of clock cycles per main loop iteration, and thus the processing time of each bit of the scalar *k,* in addition to varying their position within each main loop iteration. It is noted that it is in accordance with this particular embodiment of the present invention to include one or more main loop iterations that have zero dummy clock cycle positions, as long as different numbers of dummy clock cycle positions are used with the desired effect of additionally varying the processing time of each bit of the scalar *k.*

However, the insertion of the dummy partial multiplications can also be done without introducing a variation of the total number of clock cycles in the main loop iteration. In particular, the controller be configured to determine for each of the iterations of the main loop operation sequence a respective set of a fixed number of respective dummy clock cycle positions. The total number of clock cycles required for any given iteration of the main loop sequence is thus not altered, only the dummy clock cycle positions. While the dummy clock cycles are additional operations within each main loop iteration and increase the total number of clock cycles, the number of the dummy wait clock cycles within the processing of a key bit value, i.e. within each main loop iteration, can thus be chosen to be constant. This way, the processing of each key bit can require the same amount of time, but the addressing processes will not occur at equal times within the time frames of the respective main loop executions, i.e. they will be shifted from each other.

This de-synchronizes the processes within the execution of different main loop iterations from each other. A given operation within the main loop operation sequence will occur at different clock cycle positions in different iterations, thus making it difficult to identify it by analysing the consumed power traces of the different iterations. This in turn improves the resistance of the implementation against horizontal SCA attacks.

The solution of the present invention requires only a small amount of additional chip area for implementing the determination and control of dummy clock cycles in synchrony with the processing in other blocks of the device. Thus, the countermeasure proposed here can be applied effectively with low consumption chip area. It is noted that it is useful against both horizontal and vertical attacks, i.e. against a broad spectrum of SCA attacks.

The following description turns to embodiments of the EC kP hardware accelerator that include additional advantageous features.

In one embodiment, the controller is configured to control operation of the one or more of the computational blocks for performing field multiplication, field additions, field subtractions or field squarings, addressing of the registers to pause during one or more of the dummy clock cycles. The pausing is suitably controlled with a view to the requirements of the particular implementation of the multiplication algorithm for performing the point multiplication. At some instances of the main loop sequence of operations, while the field multiplier block performs the dummy partial multiplication of zero-operands, the field addition block may have all required operands for allowing a continuation of its operation, while at others it may be required to pause its operation. This implementation specific consideration has to be taken into account in the design process.

Different embodiments of the EC kP hardware accelerator make use of different solutions for determining the sets of dummy clock cycle positions. The distribution of dummy clock cycle positions is suitably chosen to be unpredictable and underivable for an attacker. The following approaches may be used in isolation or in combination.

In one embodiment, the controller is configured to determine the sets of dummy clock cycle positions using values currently stored in one or more of the registers. The values change overtime in a manner that cannot be predicted from the outside, especially if randomization of projective EC point coordinates was applied.

In another embodiment, the controller is configured to determine the sets of dummy clock cycle positions using an output received from a random number generator. The random number generator is in one variant of this embodiment included in the device as a further internal block. In another variant, the random numbers are provided to the EC kP hardware accelerator as an external input.

In yet another embodiment the controller is configured to determine the sets of dummy clock cycle positions using a mathematical function that is applied to a current value of a predetermined quantity. The predetermined quantity may assume a constant value, in which case the mathematical function suitably creates the desired variation for the positioning of the dummy clock cycle. In other implementations, the value is variable over time (e.g., based on current register entries), which further increases the difficulty of predicting or deriving the dummy clock cycle position.

If the number of dummy wait cycles within the main loop iterations is small, the energy consumption and the execution time of the kP computations will increase rather insignificantly.

The field multiplier block is preferably configured to perform the field multiplication operation in accordance with an implementation of a Montgomery ladder algorithm. However, other *kP* algorithms using a field multiplier block can be used as well.

A further aspect of the present invention that forms an advantageous application of the ECC hardware accelerator is a cryptographic device, which is configured to perform encryption or decryption of received input data, or a generation or a verification of a digital signature, or an authentication process using elliptic curve cryptographic operations over a finite field, wherein the cryptographic device comprises the ECC hardware accelerator of the first aspect or any its claims embodiments.

Yet another aspect of the present invention is formed by a method for controlling operation of a device for performing accelerated elliptic curve, EC, point multiplication, comprising
- controlling operation of computational blocks, registers and a bus in determining an EC point multiplication result by performing iterations of a main loop operation sequence that comprises
- in accordance with an implemented field multiplication algorithm: a sequential calculation of partial products derived from input multiplicands, and an accumulation of the partial products in an accumulation register for determining the field product of the input multiplicands; and in
- read and write accesses to the registers associated with calculating field additions, subtractions or field squarings of the respective operands;
wherein the controlling further comprises
- determining for each of the iterations of the main loop operation sequence a respective set of respective dummy clock cycle positions,
- controlling the computational blocks to perform a partial multiplication of zero-operands in dummy clock cycles corresponding to the respective determined set of respective dummy clock cycle positions for the respective main loop iteration, wherein,
- for any of the sets that has two or more dummy clock cycle positions within the same main loop iteration, each two of the dummy clock cycle positions are separated from each other by at least one clock cycle of performing a partial multiplication of non-zero operands, and
- wherein at least two of the sets of dummy clock cycle positions differ from each other.

The method of the second aspect of the invention shares the advantages of the EC kP hardware accelerator of the first aspect. Embodiments of this method comprise steps that are performed by executing the controller's additional operational features described in the context of the different embodiments of the first aspect of the invention.

Furthermore, another aspect of the present invention is a computer program comprising executable program code that when stored in a memory of a programmable computer instructs the computer to perform the method of claim the second aspect or one of its embodiments.

In the following, further embodiments will be described with reference to the figures.
Fig. 1 is a block diagram of an EC kP hardware accelerator;
Fig. 2 is a diagram illustrating an example of a main loop operation sequence that is not in accordance with the present invention.
Figs 3 shows a diagram of three modified main loop operations sequences in accordance with an embodiment of the present invention;
Fig. 4 shows a further diagram of three modified main loop operations sequences in accordance with an embodiment of the present invention; and
Fig. 5 shows a further diagram with three variants of operations in the course of performing an individual field multiplication for use with embodiments in accordance with any of the Figs. 2 to 4.

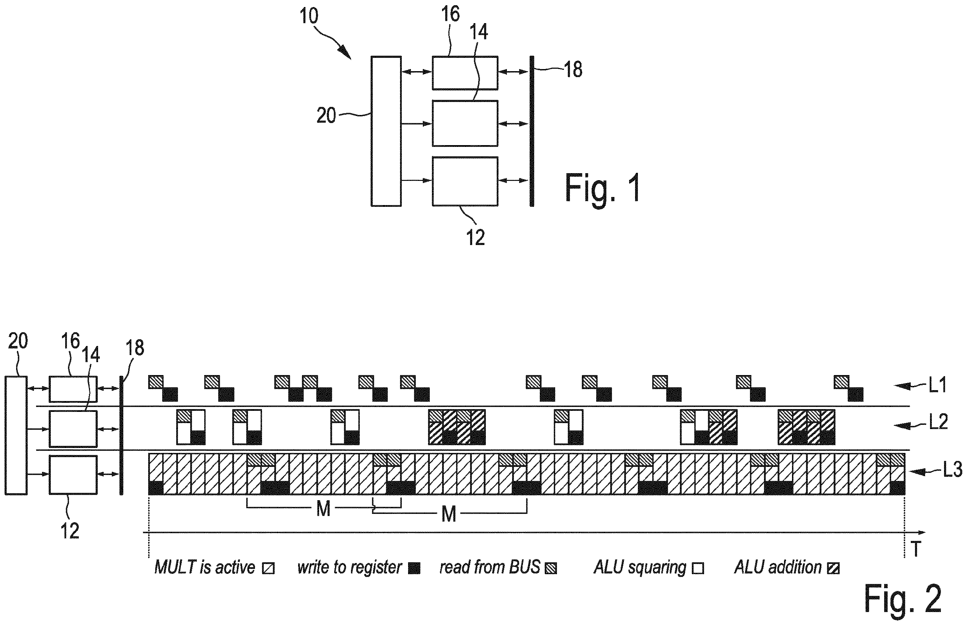

Fig. 1 is a block diagram of an EC kP hardware accelerator 10 according to an embodiment of the present invention. The hardware accelerator 10 comprises two computational blocks 12 and 14. The computational block 12 is a multiplier block for performing a field multiplication. Computational block 14 is an arithmetic logic unit (ALU) for performing a field addition, field subtraction and/or a field squaring. Furthermore, the hardware accelerator 10 comprises addressable registers 16, which are represented in simplified form by a block only. A bus 18 serves for data exchange between the blocks and the registers. The bus may be implemented as a multiplexer.

It is noted that the distribution of operational functions between hardware blocks of the EC kP hardware accelerator of the invention can be varied in other embodiments. The embodiment of Fig. 1 is only an exemplary implementation of how field multiplication, field addition, field subtraction and field squaring can be distributed in hardware. In other embodiments, the operational capabilities of performing field subtraction or field squaring are not provided in the computational blocks. It is further noted that different forms of hardware implementations of the hardware accelerator 10 can be used. For instance, some embodiments are monolithic integrated circuits, others are field programmable gate arrays (FPGA).

A controller 20 is connected with the computational blocks 12 and 14, with the registers 16 and with the bus 18 (connection is not shown in Fig. 1). The controller 20 is configured to control operation of the computational blocks 12 and 14, the registers 16 and the bus 18 in determining an EC point multiplication result. To this end, the controller drives the computational blocks 12 and 14, the registers 16 and the bus 18 to perform iterations of a main loop operation sequence.

The controller 20 is further configured to determine for each of the iterations of the main loop operation sequence a respective set of respective dummy clock cycle positions, and to control the computational blocks to perform a partial multiplication of zero-operands in dummy clock cycles corresponding to the determined dummy clock cycle positions. In the present embodiment, the controller 20 is configured to determine the sets of dummy clock cycle positions using values currently stored in one or more of the registers 16. The values in the registers 16 change over time in a manner that cannot be predicted from the outside, if randomization of projective EC point coordinates is applied. The controller ensures that, for any of the sets of dummy clock cycle positions that includes two or more dummy clock cycle positions, each two of the dummy clock cycle positions within the same main loop iteration are separated from each other by at least one clock cycle of performing a partial multiplication of non-zero operands. Furthermore, the controller is configured to let at least two of the sets of dummy clock cycle positions differ from each other.

The functionality of the controller 20 is implemented in hardwired form by suitable electronic circuitry. In other embodiments, the controller 20 is implemented by a programmable microcontroller, and its functionality is provided by an executable control software that is stored in a memory of the microcontroller. Again, an implementation as an FPGA is another option.

The algorithm implemented in the hardware accelerator 10 performs a bitwise processing of an *l*-bit long scalar *k*=*kₗ₋₁kₗ₋₂kₗ₋₃...k₂k₁k₀.* For instance, any known implementation of the Montgomery kP calculation can be used. The same sequence of operations is performed for processing each bit of the scalar k, such as a bit of a key. The duration of the processing of a key bit is thus always the same. The Montgomery ladder as well as other binary kP algorithms can be represented as a sequence of finite field operations, i.e., multiplications, additions, subtractions, squarings, as well as the operations for storing of calculated values or operands into registers. Different algorithms performing the processing according to the Montgomery ladder are known.

Operation of the EC kP hardware accelerator 10 and, in particular, its controller 20, will be further explained in the following with additional reference to Figs. 2 to 4.

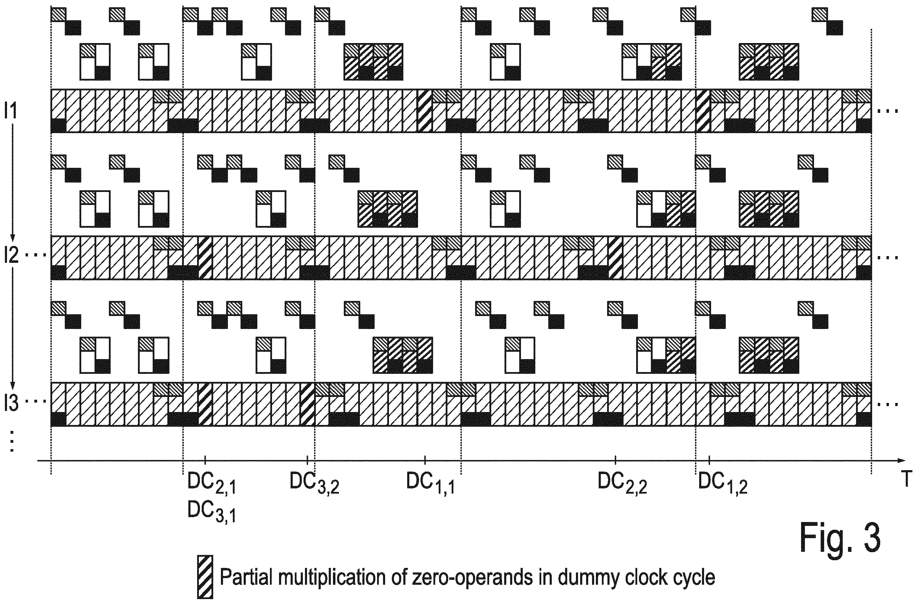

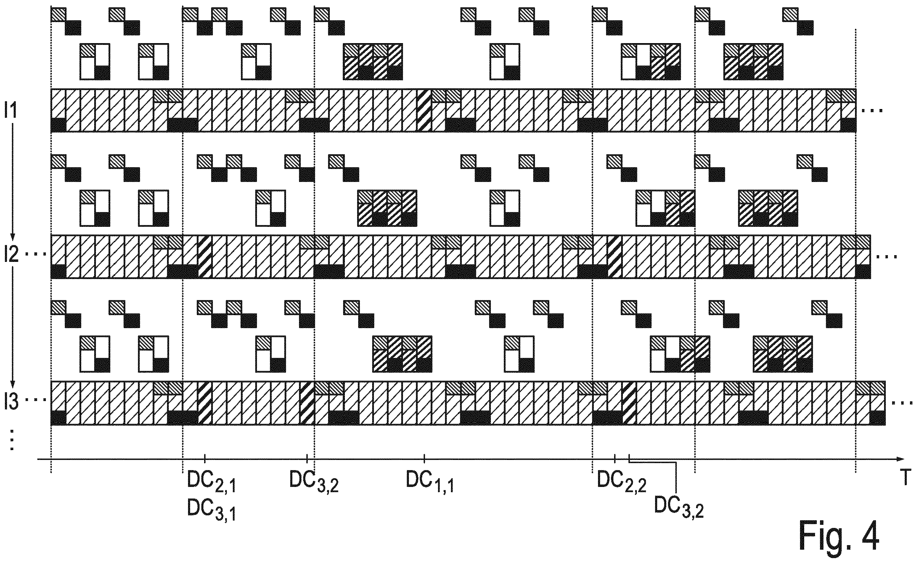

Fig. 2 is an illustration of an example of a main loop operation sequence that as shown is not in accordance with the present invention. It is used as a basis for explaining the two different embodiments of the present invention represented by Figs 3 and 4, which will provide modifications of the main loop operation sequence of Fig. 2.

Fig. 2 illustrates activities of the different blocks of the EC kP hardware accelerator 10 of Fig. 1 in one iteration of a main loop of an implemented field multiplication algorithm. The EC kP hardware accelerator 10 is again shown on the left side of Fig. 2 for orientation purposes. The right side of Fig. 2 is a timing diagram indicating operational activities at the registers 16 over time T (proceeding from left to right) in a horizontal upper lane L1, of the ALU block 14 in a middle lane L2 and of the multiplier block 12 in a lower lane L3. Thin horizontal solid lines are drawn to separate the lanes and to thus indicate that operations illustrated in the respective lanes are performed by the respective hardware unit shown on the left side of the illustration on the level of the respective lane. The time T is divided into clock cycles that appear as the horizontal extension of colored rectangles used to represent operations performed.

Fig. 2 also shows a legend for the graphical coding of different operations represented by the rectangles in the horizontal lanes L1 to L3. In particular, a large hatched rectangle having a hatching from the lower left to the upper right indicates that the multiplier block 12 performs a multiplication in the respective clock cycle. A medium sized rectangle having bold hatching from the lower left to the upper right indicates that the ALU 14 performs a field addition in the respective clock cycle. A medium-sized white rectangle indicates that the ALU 14 performs a field squaring in the respective clock cycle. A small rectangle having a dense hatching from the upper left to the lower right indicates that a write access to the registers is performed in the respective clock cycle (i.e. the register is addressed for data storing). A small rectangle having full gray filling indicates that the data is stored into the already addressed register in the respective clock cycle. The multiplier block 12 and the ALU block 14 may comprise internal registers (not shown in Fig.1 and 2). It is visible by the arrangement of densely hatched and gray small rectangles in the lanes L2 and L3 that write accesses are also performed by the ALU block 14 and the multiplier block 12 in some of the clock cycles, in which the ALU block 14 is performing an addition or field squaring, and/or in which the multiplier block 12 is performing a field multiplication operation. It is noted here that throughout Figs. 2 to 5 read-from-register operations that are performed during operation are not included in the illustration for simplicity reasons.

Storing data into a register, which is meant to refer to a separate register as well as to internal registers of the multiplier or ALU blocks, thus requires two clock cycles: at a first clock cycle the selected register/block is addressed, i.e., it obtains a special signal from the controller. At the second clock cycle, the data are stored into the previously addressed register/block. Specifically, the process of writing to a register, or in other words a "read-from-bus" operation means that the value to be written to the register is first read from the bus (densely hatched small rectangle) and then stored in the register (gray small rectangle). These operations occur as "inseparable pairs" in a sequence of two clock cycles, as can be seen in lanes L1 and L2. In one exemplary implementation, a control signal provided by the controller indicates which of the blocks is to receive a given value for storage, i.e. the control signal implements the addressing of a block for the "read-from-bus" operation. Similarly, another control signal indicates which of the blocks is to give out its (internal) value. The bus performs the delivery of the value to the addressed block indicated by the control signal, for instance by suitable gating of a combination of logic gates implementing the bus. Alternatively, the bus performs the delivery of the value to all design's blocks but only the block(s) addressed for the "read-from-bus" will be able to store the value. All this is performed during a single clock cycle covered by the densely hatched small box in lanes L1 or L2. In this clock cycle a flip-flop implementing a given cell of the register assumes the new value at its input, and then waits for the next clock signal to assume the value internally. Therefore, it is only at the next clock cycle covered by the gray rectangles that the received new value is stored in the flip-flop.

While for the purpose of this exemplary description the flip-flop has been assumed to react to the rising edge of the clock signal it is also possible to use flip-flops that react to the trailing edge of the clock signal. In that case, the described process of writing to a register can be feasible within one clock cycle: in a first half of the clock cycle, the addressing and the delivery of the value would be done (corresponding to the densely hatched small rectangle), and in a second half of the clock cycle the storage of the value (gray small rectangle).A field multiplication of two field elements - A and B - requires a number of clock cycles which depend on the implemented multiplication formula. Two field multiplications are labelled by the capital letter M in Fig. 2. In this exemplary implementation shown in Fig. 2, 11 clock cycles are required for performing a field multiplication: 2 clock cycles for storing two multiplicands into internal registers and 9 clock cycles for calculating the field products. For calculating the field products in this implementation, a 4 segment Karatsuba multiplication formula can be used, which is per se known.

In each of the 9 clock cycles a new partial product will be calculated, the result will be accumulated in an internal register and reduced (modulo reduction). In the present exemplary implementation, the multiplier block 12 can store its input data in parallel to executing the last two of the 9 calculating clock cycles, if the inputs are already available. This is not always possible. There exist some kP algorithms/implementations, in which some multiplications may have to wait for the result of field additions/subtractions. Other multiplications may not need to wait for operands. In the present implementation that is used for illustration purposes as a basis for the exemplary embodiments of Figs. 3 and 4, the multiplier does not wait for new operands, i.e. each calculation of partial product of two zero-operands requires an additional - dummy - clock cycle. The power shape of a single dummy cycle for calculation the partial products of two zero-operands is not distinguished visually from the power shapes of other partial multiplications. In fact, in the clock cycle they are performed, they cannot be recognized by an SCA.

Addition of field elements needs four clock cycles in the implementation of Fig. 2. In the first clock cycle, addressing of the ALU block 14 is performed for reading its first operand from the bus (densely hatched small rectangle in lane L2). In the second clock cycle, the data read from the bus are stored into an internal register of the ALU block 14 (gray small rectangle). In the third clock cycle, addressing of the ALU block 14 for reading of its second operand from the bus (densely hatched small rectangle) is performed. In the fourth clock cycle, the result of the calculation is stored into an internal register (small gray rectangle).

A field squaring needs only two clock cycles to be performed. In the first clock cycle, addressing of the ALU block 14 is performed for reading its operand from the bus (densely hatched small rectangle) and squaring it. In the second clock cycle, the result of the calculation is stored into an internal register (small gray rectangle).

Figs 3 shows a diagram illustrating three iterations I1 to I3 of modified main loop operation sequences in accordance with an embodiment of the present invention. The illustration of Fig. 3 is based on that of Fig. 2, and thus uses the same sequence of operations. However, the different iterations are manifestations of the control operation of the controller 20 according to the control method of the present invention, which determines dummy clock cycle positions and adds further partial multiplications of zero-operands at the dummy clock cycle positions in the respective main loop iterations, as will be explained in the following in more detail.

The controller is configured to determine, for each iteration I1 to I3 of the exemplary main loop operation sequence that was illustrated in Fig. 2, a respective set of respective dummy clock cycle positions. In the exemplary embodiment of Fig. 3, in each shown main loop iteration, two dummy clock cycle positions are determined. They are marked graphically on the time axis T by ""DC. For instance, the label DC_{1,1} indicates a first dummy clock cycle position within the first iteration 11, and DC_{1,2} indicates a second dummy clock cycle position within the first iteration 11. Clock cycles corresponding to the dummy clock cycle positions are indicated as black and white hashing in the respective rectangles.

The controller is further configured to control the field multiplier block 12 to perform a partial multiplication of zero-operands in these dummy clock cycles corresponding to the determined dummy clock cycle positions. These operations are represented in Fig. 3 by large rectangles with a bold diagonal hatching. In comparison with the main loop operational sequence shown in Fig. 2, these dummy clock cycles add to the total number of clock cycles required for performing the main loop. While the dummy clock cycles are additional operations within each main loop iteration and increase the total number of clock cycles, the number of the dummy wait clock cycles within the processing of a key bit value, i.e. within each main loop iteration, can thus be chosen to be constant. In the present embodiment, the same number of dummy clock cycle positions (namely: two) is determined for each of the main loop iterations I1 to I3. This way, the number of clock cycles in each iteration remains fixed.

However, the dummy clock cycle positions are different over the different iterations. In particular, at least two of the sets of dummy clock cycle positions are different from each other. In the present example, the three sets of dummy clock cycle positions underlying the main loop iterations I1, I2 and I3 all differ from each other. Furthermore, each two of the dummy clock cycle positions within a given main loop iteration I1, I2, or I3 are determined by the controller to be separated from each other by at least one clock cycle of performing a partial multiplication of non-zero operands because only a single dummy partial multiplication of zero-operands has a hiding effect. This way, the processing of each key bit can require the same amount of time, but the addressing processes will not occur at equal times within the time frames of the respective main loop executions, i.e. they will be shifted from each other.

The additional dummy partial multiplication of zero-operands do not change the output value of the field multiplier block with respect to an ongoing calculation. However, during the dummy activity, the field multiplier block consumes additional energy that is advantageously used as noise, to hide the small differences in energy consumption caused by key-dependent addressing of the blocks.

According to the present embodiment, therefore, key dependent addressing of blocks (an operation shown by the many densely hatched small rectangles in Fig.2) does not happen anymore in the same clock cycle number of the main loop iterations, i.e. the dependent addressing processes are de-synchronized. This way, the success probability of horizontal SCA attacks is reduced in comparison with the implementation shown in Fig. 2.

Figs 4 shows another diagram illustrating three iterations I1 to I3 of modified main loop operation sequences in accordance with another embodiment of the present invention. The illustration of Fig. 4 is again based on that of Fig. 2, and thus uses the same sequence of operations requiring. However, the different iterations I1 to I3 are manifestations of the control operation of the controller 20 according to another embodiment of the control method of the present invention, which determines dummy clock cycle positions and adds further partial multiplications of zero-operands at the dummy clock cycle positions in the respective main loop iterations.

The following description will focus on only the differences of the present embodiment in comparison with that of Fig. 3. While in the present embodiment, the controller again determines dummy clock cycle positions, the number of dummy clock cycle positions in each main loop iteration is allowed to be different from that used in other main loop iterations. Some iterations may have equal numbers of dummy clock cycle positions, but not all. In the exemplary illustration of Fig. 4, the first iteration 11 has one dummy clock cycle position, the second iteration I2 has two, and the third iteration I3 has three dummy clock cycle positions. The numbers can be exchanged to form different embodiments, and the numbers can all be different from the present exemplary embodiment. In particular, they can be higher to further increase the desired effect of protection against SCA. In particular a random number of dummy partial multiplications of zero-operands in the different main loop iterations can be used. This randomizes the total number of clock cycles per main loop iteration, and thus the processing time of each bit of the scalar *k,* in addition to varying their position within each main loop iteration.

This embodiment can therefore further de-synchronize the key dependent addressing of the one or more computational blocks and registers in the main loop iterations and reduce this way the success of the attacks.

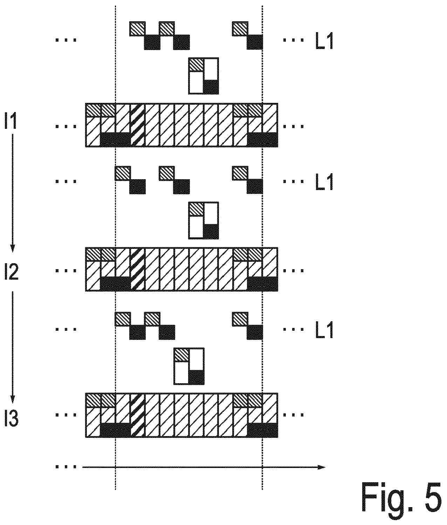

Fig. 5 shows a further diagram with three variants of operations in the course of performing an individual field multiplication during three different iterations. The variation concept presented with reference to Fig. 5 is suited for use with any of the embodiments described herein, and is in particular suitable for the embodiments disclosed with reference to Figs. 3 and 4. The illustrative examples shown in Fig. 5 are based on the operations performed during the second field multiplication during the second iteration L2 shown in Fig. 3. For the purpose of this example, this individual field multiplication is shown in the context of an iteration L1 in the present embodiment. In iterations L2 and L3, this field multiplication operation is varied in that some register operations associated respectively with writing to the BUS and reading from the BUS are shifted to different clock cycles, as shown in the respective lane L1 in the different iterations L1 to L3. The time shifts shown in Fig. 5 are exemplary options, other time shifts can be made if it does not influence the correctness of the results. While the shift in time in the performance of these operations does not have any influence on the calculation, at least in the case shown in Fig. 5, the pattern of performed register operations is further blurred by the irregularity introduced by these time shifts.

In summary, embodiments of a device for performing accelerated elliptic curve point multiplication determine for each of the iterations of a main loop operation sequence a respective set of respective dummy clock cycle positions, and control computational blocks to perform a partial multiplication of zero-operands in dummy clock cycles corresponding to the respective determined dummy clock cycle positions of the set of dummy clock cycle positions for the respective main loop iteration. For any of the sets that has two or more dummy clock cycle positions within the same main loop iteration, each two of the dummy clock cycle positions are separated from each other by at least one clock cycle of performing a partial multiplication of non-zero operands, and at least two of the sets of the dummy clock cycle positions differ from each other.

## Claims

1. A device for performing accelerated elliptic curve, EC, point multiplication, comprising
- one or more computational blocks for performing a field multiplication, a field addition, field subtraction or a field squaring;
- addressable registers;
- a bus for data exchange between the blocks and the registers; and
- a controller, which is configured
to control operation of the computational blocks, the registers and the bus in determining an EC point multiplication result by performing iterations of a main loop operation sequence that comprises
- in accordance with an implemented field multiplication algorithm: a sequential calculation of partial products derived from input multiplicands, and an accumulation of the partial products in an internal accumulation register of the computational block for determining the field product of the input multiplicands; and in
- read and write accesses to the registers associated with calculating field multiplications, field additions, and/or field subtractions, and/or or field squarings of the respective operands;
wherein the controller is further configured
to determine for each of the iterations of the main loop operation sequence a respective set of respective dummy clock cycle positions, and to control the computational blocks to perform a partial multiplication of zero-operands in dummy clock cycles corresponding to the respective determined set of respective dummy clock cycle positions for the respective main loop iteration, wherein, for any of the sets that has two or more dummy clock cycle positions within the same main loop iteration, each two of the dummy clock cycle positions are separated from each other by at least one clock cycle of performing a partial multiplication of non-zero operands, and wherein at least two of the sets of the dummy clock cycle positions differ from each other.

2. The device of claim 1, wherein the controller is configured to control operation of one or more of the computational blocks for performing field multiplication, field addition, and/or field subtraction and/or field squaring, and addressing of the registers, to pause during one or more of the dummy clock cycles.

3. The device of claim 1 or 2, wherein the controller is configured to determine the sets of dummy clock cycle positions using values currently stored in one or more of the registers.

4. The device of any of the claims 1 to 3, wherein the controller is configured to determine the sets of dummy clock cycle positions using an output received from a random number generator.

5. The device of any of the claims 1 to 4, wherein the controller is configured to determine the sets of dummy clock cycle positions using a mathematical function applied to a current value of a predetermined quantity.

6. The device of any of the preceding claims, wherein the controller is configured to determine at least two sets of dummy clock cycle positions having different numbers of dummy clock cycle positions .

7. The device of any of the claims 1 to 6, wherein the controller is configured to determine the sets of dummy clock cycle positions all having a same number of dummy clock cycle positions, wherein at least two of the sets are different.

8. The device of any of the preceding claims, wherein the bus is implemented as a multiplexer.

9. The device of any of the preceding claims, comprising logic gates configured to react on an operation and address received from the controller, including a write-to-BUS operation which connects an output of a source block to the inputs of all other blocks, and a read-from-BUS operation, wherein only a destination block accepts values on its input as data for processing.

10. The device of any of the preceding claims, wherein the field multiplier block is configured to perform the field multiplication operation in accordance with an implementation of a Montgomery ladder, or double-and-add, or other binary *kP* execution algorithm.

11. A cryptographic device, which is configured to perform encryption or decryption of received input data, or a generation or a verification of a digital signature, or an authentication process using elliptic curve cryptographic operations over a finite field, wherein the cryptographic device comprises a device of any of the claims 1 to 10.

12. A method for controlling operation of a device for performing accelerated elliptic curve, EC, point multiplication, comprising
- controlling operation of computational blocks, registers and a bus in determining an EC point multiplication result by performing iterations of a main loop operation sequence that comprises
- in accordance with an implemented field multiplication algorithm: a sequential calculation of partial products derived from input multiplicands, and an accumulation of the partial products in an accumulation register for determining the field product of the input multiplicands; and in
- read and write accesses to the registers associated with calculating field multiplications, field additions, and/or field subtractions and/or field squarings of the respective operands;
wherein the controlling further comprises
- determining for each of the iterations of the main loop operation sequence a respective set of respective dummy clock cycle positions, i.e. a set of dummy clock cycle positions,
- controlling the computational blocks to perform a partial multiplication of zero-operands in dummy clock cycles corresponding to the respective determined set of respective dummy clock cycle positions for the respective main loop iteration, wherein,
- for any of the sets that has two or more dummy clock cycle positions within the same main loop iteration, each two of the dummy clock cycle positions are separated from each other by at least one clock cycle of performing a partial multiplication of non-zero operands, and
- wherein at least two of the sets of dummy clock cycle positions differ from each other.

13. A computer program comprising executable program code that when stored in a memory of a programmable computer instructs the computer to perform the method of claim 12.

## Patentansprüche

1. Vorrichtung zur Durchführung einer beschleunigten elliptischen Kurven, EC, Punktmultiplikation , umfassend:
- einen oder mehrere Rechenblöcke zur Durchführung einer Feldmultiplikation, einer Feldaddition, einer Feldsubtraktion oder einer Feldquadrierung;
- adressierbare Register;
- einen Bus für den Datenaustausch zwischen den Blöcken und den Registern; und
- einen Controller, der konfiguriert ist
den Betrieb der Rechenblöcke, der Register und des Busses bei der Bestimmung eines EC-Punkt-Multiplikationsergebnisses zu steuern, indem Iterationen einer Hauptschleifenoperationssequenz durchgeführt werden, die Folgendes umfasst
- gemäß einem implementierten Feldmultiplikationsalgorithmus: eine sequentielle Berechnung von aus Eingangsmultiplikanden abgeleiteten Teilprodukten und eine Akkumulation der Teilprodukte in einem internen Akkumulationsregister des Rechenblocks zur Bestimmung des Feldprodukts der Eingangsmultiplikanden; und in
- Lese- und Schreibzugriffe auf die Register im Zusammenhang mit der Berechnung von Feldmultiplikationen, Feldadditionen und/oder Feldsubtraktionen, und/oder Feldquadrierungen der jeweiligen Operanden;
wobei der Controller weiterhin konfiguriert ist
für jede der Iterationen der Hauptschleifenoperationssequenz einen jeweiligen Satz von jeweiligen Dummy-Taktzykluspositionen zu bestimmen und die Rechenblöcke zu steuern, um eine Teilmultiplikation von Null-Operanden in Dummy-Taktzyklen durchzuführen, die dem jeweiligen bestimmten Satz von jeweiligen Dummy-Taktzykluspositionen für die jeweilige Hauptschleifeniteration entsprechen, wobei für jeden der Sätze, der zwei oder mehr Dummy-Taktzykluspositionen innerhalb derselben Hauptschleifeniteration aufweist, alle jeweils zwei der Dummy-Taktzykluspositionen durch mindestens einen Taktzyklus der Durchführung einer Teilmultiplikation von Nicht-Null-Operanden voneinander getrennt sind, und wobei sich mindestens zwei der Sätze der Dummy-Taktzykluspositionen voneinander unterscheiden.

2. Vorrichtung nach Anspruch 1, wobei der Controller so konfiguriert ist, dass er den Betrieb eines oder mehrerer der Rechenblöcke zur Durchführung von Feldmultiplikation, Feldaddition und/oder Feldsubtraktion und/oder Feldquadrierung sowie die Adressierung der Register so steuert, dass sie während eines oder mehrerer der Dummy-Taktzyklen pausieren.

3. Vorrichtung nach Anspruch 1 oder 2, wobei der Controller so konfiguriert ist, dass er die Sätze von Dummy-Taktzykluspositionen unter Verwendung von aktuell in einem oder mehreren Registern gespeicherten Werten bestimmt.

4. Vorrichtung nach einem der Ansprüche 1 bis 3, wobei der Controller so konfiguriert ist, dass er die Sätze von Dummy-Taktzykluspositionen unter Verwendung einer von einem Zufallszahlengenerator empfangenen Ausgabe bestimmt.

5. Vorrichtung nach einem der Ansprüche 1 bis 4, wobei der Controller so konfiguriert ist, dass er die Sätze von Dummy-Taktzykluspositionen unter Verwendung einer mathematischen Funktion bestimmt, die auf einen aktuellen Wert einer vorbestimmten Größe angewendet wird.

6. Vorrichtung nach einem der vorhergehenden Ansprüche, wobei der Controller so konfiguriert ist, dass er mindestens zwei Sätze von Dummy-Taktzykluspositionen mit einer unterschiedlichen Anzahl von Dummy-Taktzykluspositionen bestimmt.

7. Vorrichtung nach einem der Ansprüche 1 bis 6, wobei der Controller so konfiguriert ist, dass er die Sätze von Dummy-Taktzykluspositionen bestimmt, die alle eine gleiche Anzahl von Dummy-Taktzykluspositionen aufweisen, wobei mindestens zwei der Sätze unterschiedlich sind.

8. Vorrichtung nach einem der vorhergehenden Ansprüche, wobei der Bus als Multiplexer implementiert ist.

9. Vorrichtung nach einem der vorhergehenden Ansprüche, die logische Gatter umfasst, die so konfiguriert sind, dass sie auf eine von dem Controller empfangene Operation und Adresse reagieren, einschließlich einer Write-to-BUS-Operation, die einen Ausgang eines Quellblocks mit den Eingängen aller anderen Blöcke verbindet, und einer Read-from-BUS-Operation, bei der nur ein Zielblock Werte an seinem Eingang als Daten zur Verarbeitung annimmt.

10. Vorrichtung nach einem der vorhergehenden Ansprüche, wobei der Feldmultiplikatorblock so konfiguriert ist, dass er die Feldmultiplikationsoperation gemäß einer Implementierung einer Montgomery-Leiters oder eines Double-and-Add- oder eines anderen binären *kP*-Ausführungsalgorithmus durchführt.

11. Kryptografische Vorrichtung, die so konfiguriert ist, dass sie eine Verschlüsselung oder Entschlüsselung von empfangenen Eingabedaten oder eine Erzeugung oder Überprüfung einer digitalen Signatur oder einen Authentifizierungsprozess unter Verwendung von kryptografischen Operationen mit elliptischen Kurven über einem endlichen Feld durchführt, wobei die kryptografische Vorrichtung eine Vorrichtung nach einem der Ansprüche 1 bis 10 umfasst.

12. Verfahren zur Steuerung des Betriebs einer Vorrichtung zur Durchführung einer beschleunigten elliptischen Kurven, EC, Punktmultiplikation, umfassend
- Steuern des Betriebs von Rechenblöcken, Registern und eines Busses bei der Bestimmung eines EC-Punkt-Multiplikationsergebnisses durch die Durchführung von Iterationen einer Hauptschleifenoperationssequenz, die Folgendes umfasst
- gemäß einem implementierten Feldmultiplikationsalgorithmus: eine sequentielle Berechnung von Teilprodukten, die von Eingangsmultiplikanden abgeleitet sind, und eine Akkumulation der Teilprodukte in einem Akkumulationsregister zur Bestimmung des Feldprodukts der Eingangsmultiplikanden; und in
- Lese- und Schreibzugriffe auf die Register im Zusammenhang mit der Berechnung von Feldmultiplikationen, Feldadditionen und/oder Feldsubtraktionen und/oder Feldquadrierungen der jeweiligen Operanden;
wobei das Steuern ferner Folgendes umfasst
- Bestimmen eines jeweiligen Satzes von jeweiligen Dummy-Taktzykluspositionen, d.h. eines Satzes von Dummy-Taktzykluspositionen, für jede der Iterationen der Hauptschleifenoperationssequenz,
- Steuern der Rechenblöcke, um eine Teilmultiplikation von Null-Operanden in Dummy-Taktzyklen durchzuführen, die dem jeweiligen bestimmten Satz von jeweiligen Dummy-Taktzykluspositionen für die jeweilige Hauptschleifeniteration entsprechen, wobei,
- für jede der Mengen, die zwei oder mehr Dummy-Taktzykluspositionen innerhalb dergleichen Hauptschleifeniteration aufweist, alle jeweils zwei der Dummy-Taktzykluspositionen durch mindestens einen Taktzyklus der Durchführung einer Teilmultiplikation von Nicht-Null-Operanden voneinander getrennt sind, und
- wobei sich mindestens zwei der Sätze von Dummy-Taktzykluspositionen voneinander unterscheiden.

13. Computerprogramm mit ausführbarem Programmcode, der, wenn er in einem Speicher eines programmierbaren Computers gespeichert ist, den Computer anweist, das Verfahren nach Anspruch 12 durchzuführen.

## Revendications

1. Dispositif pour effectuer la multiplication accélérée par points sur courbe elliptique, EC, comprenant
- un ou plusieurs blocs de calcul pour effectuer une multiplication de champ, une addition de champ, une soustraction de champ ou une mise au carré de champ ;
- les registres adressables ;
- un bus pour l'échange de données entre les blocs et les registres ; et
- un contrôleur configuré pour
commander le fonctionnement des blocs de calcul, des registres et du bus lors de la détermination d'un résultat de multiplication par points sur EC en effectuant des itérations d'une séquence d'opérations en boucle principale qui comprend
- conformément à un algorithme de multiplication de champ mis en oeuvre : un calcul séquentiel de produits partiels dérivés de multiplicandes d'entrée, et une accumulation des produits partiels dans un registre d'accumulation interne du bloc de calcul pour déterminer le produit de champ des multiplicandes d'entrée ; et en
- des accès en lecture et en écriture aux registres associés au calcul des multiplications de champs, des additions de champs et/ou des soustractions de champs, et/ou des mises au carré de champs des opérandes respectifs ;
dans lequel le contrôleur est en outre configuré pour
déterminer pour chacune des itérations de la séquence d'opérations de boucle principale un ensemble respectif de positions respectives de cycles d'horloge factice, et pour commander les blocs de calcul pour effectuer une multiplication partielle d'opérandes nuls dans des cycles d'horloge factice correspondant à l'ensemble déterminé respectif de positions de cycle d'horloge factice respectives pour l'itération de boucle principale respective, dans lequel, pour l'un quelconque des ensembles qui présente deux ou plusieurs positions de cycle d'horloge factice dans la même itération de boucle principale, chacune des deux positions de cycle d'horloge factice sont séparée les unes des autres par au moins un cycle d'horloge consistant à effectuer une multiplication partielle d'opérandes non nuls, et dans lequel au moins deux des ensembles de positions de cycle d'horloge factice diffèrent l'un de l'autre.

2. Dispositif selon la revendication 1, dans lequel le contrôleur est configuré pour commander le fonctionnement d'un ou plusieurs des blocs de calcul pour effectuer une multiplication de champ, une addition de champ et/ou une soustraction de champ et/ou une mise au carré de champ, et l'adressage des registres, pour faire une pause pendant un ou plusieurs cycles d'horloge factice.

3. Dispositif selon la revendication 1 ou 2, dans lequel le contrôleur est configuré pour déterminer les ensembles de positions de cycle d'horloge factice en utilisant des valeurs actuellement stockées dans un ou plusieurs des registres.

4. Dispositif selon l'une quelconque des revendications 1 à 3, dans lequel le contrôleur est configuré pour déterminer les ensembles de positions de cycle d'horloge factice en utilisant une sortie reçue d'un générateur de nombres aléatoires.

5. Dispositif selon l'une quelconque des revendications 1 à 4, dans lequel le contrôleur est configuré pour déterminer les ensembles de positions de cycle d'horloge factice en utilisant une fonction mathématique appliquée à une valeur actuelle d'une quantité prédéterminée.

6. Dispositif selon l'une quelconque des revendications précédentes, dans lequel le contrôleur est configuré pour déterminer au moins deux ensembles de positions de cycle d'horloge factice ayant des nombres différents de positions de cycle d'horloge factice.

7. Dispositif selon l'une quelconque des revendications 1 à 6, dans lequel le contrôleur est configuré pour déterminer les ensembles de positions de cycle d'horloge factice ayant tous un même nombre de positions de cycle d'horloge factice, dans lequel au moins deux des ensembles sont différents.

8. Dispositif selon l'une quelconque des revendications précédentes, dans lequel le bus est implémenté sous forme de multiplexeur.

9. Dispositif selon l'une quelconque des revendications précédentes, comprenant des portes logiques configurées pour réagir à une opération et à une adresse reçue du contrôleur, y compris une opération d'écriture sur BUS qui connecte une sortie d'un bloc source aux entrées de tous les autres blocs, et une opération de lecture depuis le BUS, dans laquelle seul un bloc de destination accepte des valeurs sur son entrée en tant que données à traiter.

10. Dispositif selon l'une quelconque des revendications précédentes, dans lequel le bloc multiplicateur de champ est configuré pour effectuer l'opération de multiplication de champ conformément à une mise en oeuvre d'une échelle de Montgomery, ou d'un algorithme de double et d'addition, ou d'un autre algorithme d'exécution de *kP* binaire.

11. Dispositif cryptographique, qui est configuré pour effectuer un cryptage ou un déchiffrement de données d'entrée reçues, ou une génération ou une vérification d'une signature numérique, ou un processus d'authentification utilisant des opérations cryptographiques à courbe elliptique sur un champ fini, dans lequel le dispositif cryptographique comprend un dispositif selon l'une quelconque des revendications 1 à 10.

12. Procédé pour commander le fonctionnement d'un dispositif pour effectuer une multiplication accélérée par points sur courbe elliptique, EC, comprenant les étapes consistant à
- commander le fonctionnement de blocs de calcul, de registres et d'un bus pour déterminer un résultat de multiplication par points sur EC en effectuant des itérations d'une séquence d'opérations de boucle principale qui comprend
- conformément à un algorithme de multiplication de champ mis en oeuvre : un calcul séquentiel de produits partiels dérivés de multiplicandes d'entrée, et une accumulation des produits partiels dans un registre d'accumulation pour déterminer le produit de champ des multiplicandes d'entrée ; et
- des accès en lecture et en écriture aux registres associés au calcul des multiplications de champs, des additions de champs et/ou des soustractions de champs, et/ou des mises au carré de champs des opérandes respectifs ;
dans lequel la commande comprend en outre les étapes consistant à
- déterminer pour chacune des itérations de la séquence d'opérations de boucle principale un ensemble respectif de positions de cycle d'horloge factice respectives, c'est-à-dire un ensemble de positions de cycle d'horloge factice,
- commander les blocs de calcul pour effectuer une multiplication partielle d'opérandes nuls dans des cycles d'horloge factice correspondant à l'ensemble déterminé respectif de positions de cycle d'horloge factice respectives pour l'itération de boucle principale respective, dans lequel, pour l'un quelconque des ensembles qui présente deux ou plusieurs positions de cycle d'horloge factice dans la même itération de boucle principale, chacune des deux positions de cycle d'horloge factice sont séparées les unes des autres par au moins un cycle d'horloge consistant à effectuer une multiplication partielle d'opérandes non nuls, et dans lequel
- au moins deux des ensembles de positions de cycle d'horloge factice diffèrent l'un de l'autre.

13. Programme informatique comprenant un code de programme exécutable qui, lorsqu'il est stocké dans une mémoire d'un ordinateur programmable, ordonne à l'ordinateur d'exécuter le procédé selon la revendication 12.
